# FASCICULE DE BREVET EUROPEEN

(11) **EP 0 861 191 B1**
(45) Date de publication et mention de la délivrance du brevet: **24.05.2000**
(21) Numéro de dépôt: 95940331.2
(22) Date de dépôt: 17.11.1995
(51) Int. Cl.: B65B 9/15, B65B 67/12, B65F 1/06

(54) **DISPOSITIF POUR COLLECTER ET CONFINER LES DECHETS HOSPITALIERS ET MENAGERS**
VORRICHTUNG ZUM SAMMELN UND EINSCHLIESSEN VON KRANKENHAUSABFÄLLEN UND HAUSMÜLL
DEVICE FOR COLLECTING AND CONFINING HOSPITAL AND HOUSEHOLD WASTE

(43) Date de publication de la demande: 02.09.1998
(73) Titulaire: Captiva Holding, 75008 Paris (FR)
(72) Inventeur: Lecomte, Michel, 17139 Dompierre-sur-Mer (FR)
(74) Mandataire: Dronne, Guy
(86) Numéro de dépôt international: FR9501520
(87) Numéro de publication internationale: WO9718992

(56) Documents cités:
- DE-A- 2 364 180
- FR-A- 2 508 788
- US-A- 3 892 059

## Description

La présente invention concerne un dispositif pour emballer les déchets de type ménagers et les déchets issus des soins médicaux prodigués aux êtres humains et aux animaux ainsi que les déchets produits par les activités liées à ces soins.

L'emballage des déchets actuellement est réalisé au moyen de sacs plastiques ou cartons plastifiés. Ce type d'emballage ne permet pas de confiner correctement les gaz ou odeurs relargués par les déchets.

Le résultat se traduit par une propagation volatile de germes patogènes et odeurs désagréables, ce qui pose un problème de contamination potentielle notamment dans les centres de soins, maternités, cliniques vétérinaires, laboratoires d'analyses, toilettes de locaux publiques au travers des serviettes hygiéniques féminines et plus simplement locaux poubelles d'immeubles.

Le dispositif selon l'invention permet de remédier à cet inconvénient par emballage des déchets dans des enveloppes étanches aux gaz, odeurs et liquides et ce quelque soit la position des dites enveloppes après fermeture.

Une adaptation du dispositif est notamment possible sur les bouches de vide ordures des immeubles garantissant alors une propreté constante des conduits et jouant le rôle de trappe anti odeurs à l'utilisation.

Des sytèmes proches ont été déja étudiés notamment celui décrit dans le brevet européen n° 281 355 mais ce dernier oblige l'utilisateur à pousser ses objets pour obtenir un défilement de la gaine, il n'y a pas de système d'entrainement, et la fermeture des sacs obtenus est simplement réalisée par twistage ce qui n e permet pas une réelle étancheité.

Dans le brevet européen n° 05660 le système décrit ne permet pas de régler automatiquement la dimension de l'emballage et utilise un système de pinces et non pas de rouleaux pour faire défiler la gaine.

La dimension de l'emballage peut être modifiée par remplacement d'un élément du mécanisme, mais pour donner à nouveau une dimension standart. Le mécanisme décrit n'est pas fonctionnel pour l'emballage systématique de chaque dépôt unitaire avec adaptation systématique de la dimension de gaine nécessaire.

Le document DE-A-2 364 180 décrit un dispositif d'emballage de déchets. Selon le préambule de la revendication 1.

L'innovation principale de la présente invention est l'adaptation systématique de la dimension de l'emballage aux déchets.

Pour atteindre ce but, l'invention est conforme à la partie caractérisante de la revendication 1.

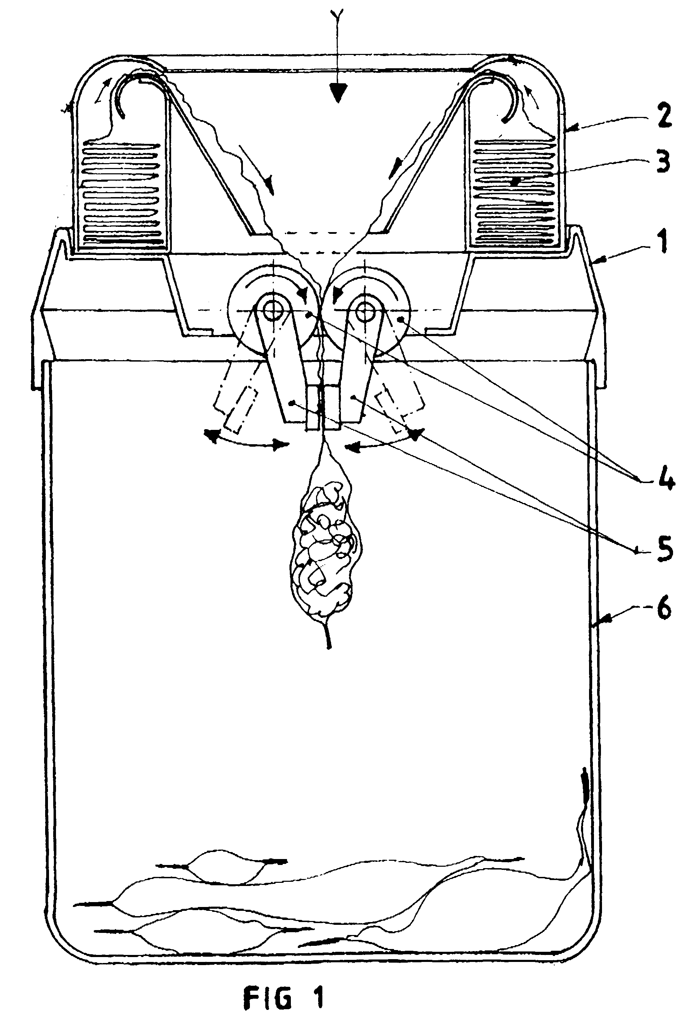

En référence à la figure 1, le dispositif est constitué d'un carter (1) faisant office de châssis supportant en partie supérieure un dévidoir (2) de gaine plastique thermo-soudable (3) formant réceptacle pour déposer les déchets, un mécanisme d'entraînement (4) de ladite gaine juste en dessous, suivi d'un mécanisme de thermo-soudage (5) puis d'un réceptacle amovible (6) permettant l'installation d'un emballage secondaire en vue de vidage périodique.

Les déchets largués à l'aplomb du réceptacle primaire tombent au fond de celui-ci pour être entraînés par ladite gaine (3), elle-même entraînée par friction entre au moins deux rouleaux ou galets tournant en sens inverse l'un par rapport à l'autre, ceux-ci disposés d'une part de façon à obtenir en permanence une pression de contact avec la gaine, disposés d'autre part de manière à ce que les surfaces de contact desdits rouleaux s'éloignent au passage des déchets tout en conservant une pression de contact avec la gaine, la quantité de gaine nécessaire pour emballer les déchets et régénérer les surfaces souillées étant liée au nombre de tours desdits rouleaux, ledit nombre de tours étant réglable à volonté par l'utilisateur ou automatiquement par un système de détection, le défilement de la gaine ainsi obtenu entraînant les déchets emprisonnés sous les rouleaux, la fermeture étanche étant réalisée à volonté ou automatiquement par actionnement d'une pince de thermo-soudage capable de couper la gaine au milieu d'une soudure large réalisant en même temps l'étanchéité de l'enveloppe crée et le fond de l'enveloppe suivante.

Un mécanisme de distribution automatique ou manuel de produit neutralisant, type germicide ou autre, peut être installé au dessus du dévidoir formant réceptacle. Son fonctionnement peut être conditionné par liaison mécanique ou électrique au fonctionnement de l'entraîneur de gaine.

Le carter (1) peut être surmonté d'un capot articulé.

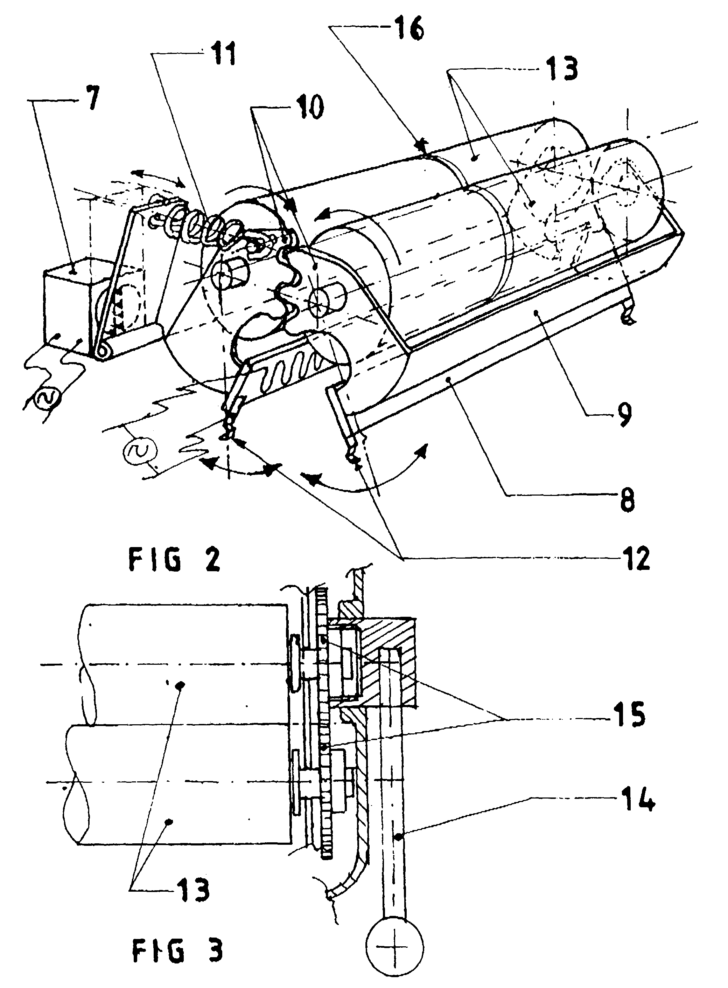

Suivant les différents modes de réalisation et suivant fig 1,2 et 3:
- L'ensemble "dévidoir, mécanisme d'entraînement, mécanisme de thermo-soudage" peut être dissociable de la partie réceptacle et venir s'adapter sur tout type de conteneur à but de collecte de déchets, voir remplacer une trappe de vide ordures ou s'intégrer dans un plan de travail de cuisine aménagée.
- Le dévidoir (2) formant réceptacle est amovible et peut être changé dans son intégralité à chaque rechargement de gaine neuve.
- La forme du dévidoir/réceptacle permet d'obtenir une surface de dépôt des déchets protégée des souillures par la présence de la gaine. La surface de gaine polluée se retrouve enfermée avec le déchets lors du défilement de la gaine et la surface de dépôt se trouve régénérée par un tronçon de gaine neuve.
- Le mécanisme d'entraînement (4) est constitué d'un jeu de rouleaux entraîneurs (13) actionnés manuellement par un volant, un levier (14) ou électriquement par un moteur.
- Le dit mécanisme peut être actionné par l'intermédiaire d'une crémaillère reliée elle même directement ou indirectement à un levier d'actionnement manuel. Une telle configuration peut permettre de relier un éventuel couvercle au dit levier et d'actionner le mécanisme par manipulation du dit couvercle.
- Dans tous les cas la rotation des rouleaux ne peut se faire que dans le sens voulu par interposition d'un système de débrayage. Le débrayage peut être obtenu par un cliquet à lame ou à bille sur les axes de rouleaux.
- Les rouleaux d'entraînement sont constitués d'un axe central rigide de faible diamètre enrobé d'une mousse élastomère de fort diamètre. Ce choix permet un montage à entraxes fixes, le passage des déchets se faisant par déformation du dit enrobage en mousse élastomère, les rouleaux sont montés en force l'un contre l'autre afin de garantir l'entraînement de la gaine à vide.
- Les rouleaux sont solidaires en rotation grâce aux engrenages (15) disposés en bout d'axe. Ces engrenages sont de diamètres identiques pour garantir le même nombre de tours aux rouleaux.
- Dans le cas où l'actionnement se fait par mise en rotation directe manuelle ou motorisée ces dits engrenages sont en prise directe. Dans le cas où l'actionnement utilise la translation d'une crémaillère, celle-ci peut être placée entre les engrenages moyennant une diminution de diamètre de ceux-ci.
- Les engrenages disposés en bout d'axes de rouleaux peuvent être montés tournants et disposer d'un alésage cranté dont la forme permet le blocage dans un seul sens de rotation d'une ou plusieurs lames ressorts solidaires des axes. Un tel montage assure le débrayage des rouleaux en cas d'inversion du sens de rotation par volant manuel, levier, moteur électrique ou crémaillère.
- L'enrobage des rouleaux entraîneurs disposent de plusieurs saignées circulaires (16) afin de ne pas refouler les liquides contenus dans les déchets.
- Les rouleaux peuvent être conçus avec un enrobage mince sur des axes de faibles diamètres ; les entraxes sont alors variables et la pression de contact maintenue par ressort de rappel entre les rouleaux.
- Selon les configurations la quantité de gaine nécessaire est obtenue soit par action manuelle avec contrôle visuel, soit par détection automatique au moyen de cellules photo-électriques ou palpeurs mécaniques installés au dessus du dévidoir/réceptacle sur un support ou un capot éventuel.
- La quantité de gaine utilisée à chaque dépôt peut être standard pour des applications spécifiques comme la collecte des serviettes hygiéniques féminines dans les locaux à usage publique, les trains, avions, gare, hôtels, maternités etc....
- La fermeture de l'emballage par thermo-soudage est réalisée grâce à un jeu de pinces chauffantes escamotables.(5)
- La fermeture des dites pinces peut être obtenue par la mise sous tension électrique simultanée d'un électro-aimant (7) et des résistances chauffantes (8) ou par l'intermédiaire d'un levier.
- La dite mise sous tension est obtenue par l'actionnement d'un contacteur. Le dit contacteur peut être actionné selon les configurations soit manuellement soit automatiquement en fin de rotation des rouleaux entraîneurs.
- La température de chauffage pour le soudage est prérèglée à la fabrication en usine et le temps de fermeture des pinces chauffantes comme du temps de soudage est défini par une temporisation.
- Les supports (9) de résistances chauffantes (8) de thermo-soudage peuvent être fixés libres en rotation sur l'axe rigide des rouleaux entraîneurs (13) et constituer ainsi les mâchoires de pincement de la gaine. Un tel montage garantit le positionnement de la soudure et simplifie la réalisation d'ensemble.
- Les dits supports (9) sont rendus solidaires en rotation entre eux grâce aux engrenages partiels (10) disposés à leurs extrémités.
- La fermeture de la pince ainsi constituée peut être assurée par déplacement d'une biellette articulée fixée sur l'une des mâchoires d'une part et fixée à un électroaimant (7) d'autre part.
- La pression de fermeture peut être limitée par un dispositif à ressort (11) intégré à la dite biellette ou placé en interface avec l'électroaimant ou entre la mâchoire maîtresse et la biellette.
- Les résistances de soudage (8) disposées sur les supports (9) peuvent disposer à leurs extrémités des contacts mécaniques par exemple à lamelles permettants de fermer le circuit électrique lors de l'accostage.
- Un tel montage empêche la chauffe inopinée des résistances en cas de défectuosité de fermeture de pince. Le soudage ne peut donc se faire en présence d'un déchet insuffisamment descendu. Le câblage s'en trouve simplifié.
- La temporisation libère la pince pour un défilement complémentaire.
- Un contacteur manuel peut shunter la temporisation à cet effet.
- La forme des surfaces de la partie chauffante des mâchoires qui rentre au contact de la gaine lors de la fermeture de la pince peut posséder une excroissance capable de couper en toute ou partie la dite gaine au milieu de la zone soudée par fluage en phase de ramollissement.
- Dans un configuration utilisant un levier (14) manuel direct, la rotation de celui-ci peut être coaxiale avec un rouleau et en prise constante avec l'engrenage débrayable du dit rouleau. L'actionnement du levier de façon alternative permet le défilement de la gaine et en fin de course ferme les supports de résistances chauffantes qui peuvent se mettre sous tension grâce à la fermeture du circuit par contacts à lamelles à l'accostage.
- L'emballage peut se faire sans soudage à chaque dépôt, la gaine formant ainsi une chaussette dont la fermeture par soudage ou autre est assurée, uniquement en fin de stock ou vidage périodique. Ce procédé n'est pas applicable par contre sur vide ordure pour cause d'encombrement du conduit commun.
- Pour faciliter l'amorçage lors du remplacement, les cartouches neuves de gaine possèdent une languette carton ou autre que l'on engage dans le mécanisme d'entraînement.
- En relation avec les différents éléments techniques de réalisation on met en évidence les modes de fonctionnement suivants:

**En configuration automatisée:** -l'utilisateur largue ou dépose ses déchets à l'aplomb du réceptacle supérieur, le détecteur de présence déclenche un moteur électrique actionnant les rouleaux, entraînant la gaine et les déchets. Le détecteur ne décelant plus de présence dans le réceptacle supérieur, les rouleaux continuent de tourner en coopération avec une temporisation réglée pour garantir un défilement supplémentaire. Ce défilement complémentaire est destiné à ne pas essayer de souder en présence de déchets et si on le souhaite de régénérer totalement les zones susceptibles d'être souillées. L'arrêt du moteur déclenche la fermeture de la pince de soudage, le soudage s'effectue en coopération avec un temporisation et le sachet coupé tombe dans le réceptacle inférieur. L'utilisateur déclenche obligatoirement l'emballage dès qu'il dépose ses déchets.

**En configuration semi-manuelle** : L'opérateur actionne un contacteur pour mettre en rotation les rouleaux et maintien le contact jusqu'à disparition des déchets. L'abandon de ce contact provoque l'arrêt du moteur et donc du défilement et simultanément par l'intermédiaire d'un relais temporisé actionne le mécanisme de soudage/coupage. En fin de temporisation l'ensemble des relais redeviennent inactifs. Si la pince de soudage ne peut pas se fermer correctement un voyant s'allume et indique à l'utilisateur de réactionner le défilement.

**En configuration manuelle** : L'opérateur actionne à volonté le défilement et le soudage/coupage au moyen de deux contacteurs distincts, un relais empêchant la mise sous tension simultanée des deux contacteurs. Si la pince de soudage ne peut pas se fermer un voyant s'allume et indique à l'utilisateur de réactionner le défilement.

**En configuration à mise en rotation manuelle directe** L'opérateur actionne à volonté un levier ou un volant relié mécaniquement aux rouleaux jusqu'à disparition des déchets puis au moyen d'un contacteur procède au soudage /coupage. Si la pince ne peut pas se fermer un voyant s'allume et indique à l'utilisateur de réactionner le défilement.

Dans les configuration manuelle l'opérateur peut omettre de procéder au soudage, les déchets se trouvent alors emballés dans une "chaussette" mais la pression constante des rouleaux sur la gaine permet un confinement déjà conséquent, de même en cas de panne de la pince dans les version automatisées.

## Revendications

1. Dispositif pour emballer les déchets issus des soins médicaux prodigués aux êtres humains ou aux animaux ainsi que les déchets de type ménagers, comprenant un carter (1) faisant office de châssis supportant en partie supérieure un dévidoir (2) de gaine plastique thermo-soudable (3) formant un réceptacle primaire à déchets, des moyens d'entraînement (4) de ladite gaine exerçant en permanence une pression sur ladite gaine et disposés juste en dessous, et des moyens (5) de thermo-soudage par pince réalisant ainsi des enveloppes étanches aux émanations volatiles et liquides, les déchets largués à l'aplomb du réceptacle primaire tombant au fond de celui-ci pour être entraînés par ladite gaine (3), caractérisé en ce que lesdits moyens d'entraînement comprennent au moins deux rouleaux disposés de part et d'autre de la gaine et s'étendant sur toute la largeur de ladite gaine pour entraîner ladite gaine par friction, lesdits rouleaux tournant en sens inverse l'un par rapport à l'autre, des moyens pour que les surfaces de contact desdits rouleaux s'éloignent au passage des déchets tout en conservant une pression de contact avec la gaine, et des moyens pour que la quantité de gaine nécessaire pour emballer les déchets et régénérer les surfaces souillées soit liée au nombre de tours desdits rouleaux, ledit nombre de tours étant réglable à volonté par l'utilisateur ou automatiquement par un système de détection, le défilement de la gaine ainsi obtenu entraînant les déchets emprisonnés sous les rouleaux, la fermeture étanche étant réalisée à volonté ou automatiquement par un système de détection, le défilement de la gaine ainsi obtenu entraînant les déchets emprisonnés sous les rouleaux, la fermeture étanche étant réalisée à volonté ou automatiquement par actionnement de ladite pince de thermo-soudage, placée, dans la direction de défilement de la gaine, en aval des rouleaux, et capable de couper la gaine au milieu de la soudure large réalisant en même temps l'étanchéité de l'enveloppe crée et le fond de l'enveloppe suivante.

2. Dispositif selon la revendication 1, caractérisé en ce que les moyens d'écartement des surfaces de contact consistent dans le fait qu'au moins un des rouleaux d'entraînement est constitué d'un axe rigide de faible diamètre enrobé en forte épaisseur d'un matériau à grande déformation élastique permettant le passage de la gaine chargée d'un déchet encombrant par simple déformation.

3. Dispositif selon l'une quelconque des revendications 1 ou 2, caractérisé en ce que l'un des rouleaux au moins possède une ou plusieurs diminutions de diamètre afin de permettre le passage des liquides.

4. Dispositif selon l'une quelconque des revendications 1 à 3, caractérisé en ce que les moyens de mise sous tension des résistances (8) de thermo-soudage de la gaine en fin de cycle sont conditionnés par une fermeture correcte de la pince formée par les supports (9) desdites résistances afin d'empêcher une soudure en présence de déchets, ladite mise sous tension pouvant être assurée par des contacteurs mécaniques (12) montés directement sur lesdits supports et actionnés lors de l'accostage desdits supports à la fermeture.

5. Dispositif selon l'une quelconque des revendications 1 à 3, caractérisé en ce que les entraxes des rouleaux (13) d'entraînement sont variables lors du passage des déchets, la pression de contact nécessaire entre lesdits rouleaux et la gaine étant alors assurée par des ressorts de rappel placés entre les extrémités des axes.

6. Dispositif selon l'une quelconque des revendications 1 à 5, caractérisé en ce que le système d'entraînement des rouleaux possède un mécanisme de débrayage pour empêcher l'inversion du sens de rotation desdits rouleaux constitué par exemple par des engrenages (15) montés tournant en bout des axes de rouleaux et possédant chacun un alésage cranté dont la forme permet le blocage dans un seul sens de rotation d'une ou plusieurs lames ressorts solidaires des axes formant ainsi un cliquet.

7. Dispositif selon l'une quelconque des revendications 1 à 5, caractérisé en ce que les axes des articulations des supports (9) des résistances chauffantes de thermo-soudage sont coaxiaux avec les axes de rouleaux entraîneurs.

8. Dispositif selon l'une quelconque des revendications 1 à 6, caractérisé en ce que, en version motorisée, des moyens déterminent de façon automatique la quantité de gaine à défiler pour l'emballage grâce à des moyens de détection de présence dans le dévidoir/réceptacle constitués par exemple de cellules photo-électriques ou palpeurs mécaniques installés sur un support spécifique ou sur la face intérieure d'un éventuel capot.

9. Dispositif selon l'une quelconque des revendications 1 à 6, caractérisé en ce que les recharges neuves de gaine comprennent une amorce d'entraînement sous forme par exemple d'une languette en carton poussée manuellement entre les rouleaux.

10. Application dudit dispositif selon l'une quelconque des revendications 1 à 9 à la réalisation d'une trappe de vide ordure empêchant les odeurs de sortir du conduit grâce à la pression permanente des rouleaux sur la gaine et garantissant la propreté de celui-ci grâce à l'emballage étanche réalisé.

## Patentansprüche

1. Vorrichtung zum Einpacken von Restabfällen, die durch die medizinische Behandlung von Menschen und Tieren verursacht wurden und von Hausmüll, bestehend aus einem Gehäuse (1), das im oberen Teil eine Abgabeeinrichtung (2) für eine schweißbare Thermokunststoff-Folie (3) zum ersten Aufnehmen der Abfälle aufweist, wobei Antriebsmittel (4) vorgesehen sind, die die Folie abwickeln und ständigen Druck auf die Folie ausüben und unmittelbar darunter angeordnet sind, weiterhin bestehend aus einer Thermoschweiß-Klemmeinrichtung (5), die eine dichte Umhüllung der flüchtigen und flüssigen Stoffe bewirkt, wobei die Abfälle senkrecht ausgeklinkt werden und auf den Boden der Erstaufnahmeeinrichtung fallen, um von der Folie (3) umhüllt zu werden, **dadurch gekennzeichnet**, dass die Antriebsmittel (4) mindestens zwei Rollen aufweisen, die auf beiden Seiten der Folie angeordnet sind und sich über die gesamte Breite der Folie erstrecken, um die Folie mittels Reibung abzuwickeln, wobei die Rollen sich in entgegengesetzter Richtung drehen, dass Mittel vorgesehen sind, durch die sich die Berührungsflächen der Rollen während des Abfalldurchlaufes unter Aufrechterhaltung des Druckkontaktes mit der Folie voneinander entfernen und dass Mittel zur Regelung der Rollendrehzahl in Abhängigkeit von der zum Einhüllen der Abfälle und zur Säuberung der verschmutzten Oberflächen benötigten Folienmenge vorgesehen sind, wobei die Drehzahl entweder individuell durch den Benutzer oder automatisch durch ein Erfassungssystem regelbar ist, wobei das so erreichte Abwickeln der Folie die unter den Rollen eingeschlossenen Abfälle weiterfördert und der dichte Abschluß entweder individuell oder automatisch durch ein Erfassungssystem erreicht wird, wobei das so erreichte Abwickeln der Folie die unter den Rollen eingeschlossenen Abfälle weiter fördert und wobei der dichte Abschluss entweder individuell oder automatisch durch die Thermoschweiß-Klemmvorrichtung erreicht wird, die in Abwickelrichtung der Folie hinter den Rollen angeordnet ist und die Folie während des Schweißvorganges trennen kann, wobei gleichzeitig die Abdichtung der erzeugten Umhüllung erfolgt und der Boden der nächsten Umhüllung erzeugt wird.

2. Vorrichtung nach Anspruch 1, **dadurch gekennzeichnet**, dass die Mittel zur Beabstandung der Berührungsflächen so ausgebildet sind, dass mindestens eine der Antriebsrollen auf einer starren Achse geringen Durchmessers angeordnet ist, wobei die Rolle mit einer dicken, leicht verformbaren, elastischen Schicht ummantelt ist, die den Durchgang der Folienumhüllung mit sperrigem Abfall durch einfache Verformung ermöglicht.

3. Vorrichtung nach einem der Ansprüche 1 oder 2, **dadurch gekennzeichnet**, dass mindestens eine Rolle eine oder mehrere Einschnürungen zum Durchlass von Flüssigkeiten aufweist.

4. Vorrichtung nach einem der Ansprüche 1 bis 3, **dadurch gekennzeichnet**, dass das Thermoschweißen der Folie mittels einer elektrischen Widerstandsheizung (8) erfolgt, wobei durch das Schließen der von den Halterungen (9) der Widerstandsheizung gebildeten Klemme ein Verschweißen während des Einfüllens der Abfälle verhindert wird, wobei weiterhin ein Stromfluss durch mechanische Kontakte (12) ausgelöst wird, die direkt auf den Halterungen angeordnet sind und durch das Schließen der Halterungen betätigt werden.

5. Vorrichtung nach einem der Ansprüche 1 bis 3, **dadurch gekennzeichnet**, dass der Achsabstand der Antriebsrollen (13) während des Durchganges der Abfälle variabel ist, wobei der notwendige Kontaktdruck zwischen den Rollen und der Folie durch Federn, die zwischen den Endpunkten der Achsen angeordnet sind, bewirkt wird.

6. Vorrichtung nach einem der Ansprüche 1 bis 5, **dadurch gekennzeichnet,** dass das Antriebssystem der Rollen einen Abschaltmechanismus aufweist, um eine Richtungsumkehr der Rotation der Rollen zu verhindern, wobei der Mechanismus zum Beispiel aus Zahnrädern (15) besteht, die am Ende der Rollenachsen laufen und die jeweils eine Rasteinrichtung aufweisen, deren Form die Blockierung in nur einer Drehrichtung von einem oder mehreren der Federn gewährleistet und so eine Sperre bildet.

7. Vorrichtung nach einem der Ansprüche 1 bis 5, **dadurch gekennzeichnet**, dass die Achsen der Gelenke der Halterungen (9) der Widerstandsheizung koaxial zu den Achsen der Antriebsrollen verlaufen.

8. Vorrichtung nach einem der Ansprüche 1 bis 6, **dadurch gekennzeichnet**, dass in einer motorbetätigten Ausführungsform Mittel vorgesehen sind, die automatisch die Menge der zum Umhüllen benötigten Folie bestimmen, mittels einer Erfassungseinrichtung in der Abgabeeinrichtung / Aufnahmeeinrichtung wie einer photoelektrischen Zelle oder eines mechanischen Sensors, die auf einer speziellen Halterung oder im Inneren einer Abdeckhaube angeordnet sind.

9. Vorrichtung nach einem der Ansprüche 1 bis 6, **da** **durch gekennzeichnet,** dass Nachfüllungen der Folie einen Folienanfang zum Beispiel in Form einer Kartonzunge aufweisen, der manuell zwischen die Rollen geschoben werden kann.

10. Verwendung der Vorrichtung gemäß einem der Ansprüche 1 bis 9 als luftundurchlässige Schmutzklappe bei einem Abfallrohr zur Verhinderung von Geruchsbelästigungen durch ständige Druckbeaufschlagung der Folie durch die Rollen, wobei gleichzeitig die Sauberkeit des Rohres durch die dichte Verpackung gewährleistet ist.

## Claims

1. Device for wrapping waste resulting from medical care administered to humans or animals and waste of household type, of the type comprising a housing (1) acting as a frame supporting in its upper part a dispenser (2) of heat-sealable plastic sleeve (3) forming a primary waste receptacle, the means (4) for driving said sleeve permanently exerting a pressure on said sleeve and being disposed just underneath, and heat-sealing means (5) in the form of pliers thus producing envelopes tight with respect to the volatile and liquid emanations, the waste thrown at the base of the primary receptacle dropping to the bottom thereof and being driven by said sleeve (3), characterized in that said driving means comprise at least two rollers disposed on either side of the sleeve and extending throughout the width of said sleeve so as to drive said sleeve by friction, said rollers rotating in opposite directions with respect to each other, means so that the contact surfaces of said rollers move apart upon passage of the waste while conserving a contact pressure with the sleeve, and means so that the quantity of the sleeve necessary for wrapping the waste and for regenerating the soiled surfaces is connected with the number of rotations of said rollers, said number of rotations being adjustable as desired by the user or automatically by a detection system, the advance of the sleeve thus obtained driving the imprisoned waste under the rollers, tight closure being effected as desired or automatically by a detection system, the advance of the sleeve thus obtained driving the imprisoned waste under the rollers, tight closure being effected as desired or automatically by actuation of said heat-sealing pliers placed, in the advance direction of the sleeve, downstream from the rollers, and capable of cutting the sleeve in the middle of the wide weld, ensuring at the same time tightness of the envelope created and the bottom of the following envelope.

2. Device according to Claim 1, characterized in that the means for moving apart the contact surfaces lie in the fact that at least one of the drive rollers may be constituted by a rigid pin of small diameter coated with a considerable thickness of a material with high elastic deformation allowing passage of the sleeve laden with cumbersome waste by simple deformation.

3. Device according to Claim 1 or 2, characterized in that at least one of the rollers presents one or more reductions in diameter in order to allow passage of the liquids.

4. Device according to any one of Claims 1 to 3, characterized in that the switching on means of the resistors (8) for heat-sealing the sleeve at the end of cycle are determined by a correct closure of the pliers formed by the supports (9) of said resistors in order to prevent welding in the presence of waste, said switching on capable of being ensured by mechanical contactors (12) mounted directly on said supports and actuated when said supports come alongside upon closure.

5. Device according to any one of Claims 1 to 3, characterized in that the distance between axes of the drive rollers (13) may vary upon passage of the waste, the contact pressure necessary between said rollers and the sleeve then being ensured by return springs placed between the axes at their ends.

6. Device according to any one of Claims 1 to 5, characterized in that the system for driving the rollers presents a disconnection mechanism for preventing reversal of the direction of rotation of said rollers constituted for example by gears (15) mounted to rotate at the end of the roller axes and each presenting a notched bore whose shape allows blockage in one direction of rotation only of one or more spring blades fast with the axes, thus forming a ratchet.

7. Device according to any one of Claims 1 to 5, characterized in that the axes of the articulations of the supports (9) of the heat-sealing heating resistors are coaxial with the axes of the drive rollers.

8. Device according to any one of Claims 1 to 6, characterized in that, in motorized version, means automatically determine the quantity of sleeve to be advanced for wrapping thanks to presence detection means in the dispenser/receptacle constituted, for example, of photoelectric cells or mechanical feelers installed on a specific support or on the inner face of a possible hood.

9. Device according to any one of Claims 1 to 6, characterized in that the new sleeve refills present a leader for example in the form of a cardboard tongue pushed manually between the rollers.

10. Application of said device according to any one of Claims 1 to 9 to the production of a waste disposal unit trap preventing the odours from escaping from the duct thanks to the permanent pressure of the rollers on the sleeve and guaranteeing cleanliness thereof thanks to the tight wrapping produced.
